# EUROPÄISCHE PATENTSCHRIFT

(11) **EP 2 252 820 B1**
(45) Veröffentlichungstag und Bekanntmachung des Hinweises auf die Patenterteilung: **31.01.2018**
(21) Anmeldenummer: 09719028.4
(22) Anmeldetag: 07.02.2009
(51) Int. Cl.: F16K 31/06

(54) **EINBAUVENTILANORDNUNG MIT SIEBFILTER**
ASSEMBLY OF AN INTEGRATED VALVE AND A FILTER SCREEN
ASSEMBLAGE D'UNE SOUPAPE INTÉGRÉE ET D'UN FILTRE TAMIS

(30) Priorität: 08.03.2008 DE 102008013270
(43) Veröffentlichungstag der Anmeldung: 24.11.2010
(73) Patentinhaber: Robert Bosch GmbH, 70469 Stuttgart (DE)
(72) Erfinder: LIPPERT, Lorenz, 97737 Gemünden (DE); RETTINGER, Jürgen, 97737 Gemünden (DE)
(74) Vertreter: Thürer, Andreas
(86) Internationale Anmeldenummer: PCT/EP2009/000862
(87) Internationale Veröffentlichungsnummer: WO 2009/112131

(56) Entgegenhaltungen:
- DE-A1- 10 200 915
- DE-A1- 19 631 631
- GB-A- 904 293
- GB-A- 2 098 087
- JP-A- 5 106 756
- US-A- 5 795 038
- US-A- 5 845 672
- US-B1- 6 659 421

## Beschreibung

Die Erfindung betrifft eine Einbauventilanordnung gemäß dem Oberbegriff des Patentanspruch 1.

Von der Firma "LEE Company" (Internet: "www.theleeco.com") sind Siebfilter für Hydraulikkomponenten bekannt. Hierbei handelt es beispielsweise um einen in einen Strömungskanal einer Hydraulikanordnung eingebrachten Siebfilter. Dieser dient zum Abscheiden fester Stoffe aus einem Druckmittel, um Verunreinigungen zu minimieren. Hierbei wird unter anderem unterschieden zwischen Filtern, die in zwei Strömungsrichtungen betrieben werden können und solchen, die nur für eine Strömungsrichtung einsetzbar sind. Fixiert werden derartige Siebfilter im Strömungskanal über ein eigenes Gewinde oder über zusätzliche Befestigungsmittel. Nachteilig bei dieser Lösung ist zum Einen, dass der Strömungskanal geringe Fertigungstoleranzen aufweisen muss, damit ein solcher Siebfilter montierbar ist und zum Anderen, dass die Montage sehr aufwendig ist.

Die Druckschriften JP 5 106 756, US 6,659,421 B1, DE 102 00 915 A1 und DE 196 31 631 A1 offenbaren einen Filter für eine Ventilpatrone, der an dieser fest gehaltert ist. Ein derartiger Filter hat den Nachteil, dass beim Ausbau der Ventilpatrone aus einer Ventilbohrung eines Gehäuses sich am Filter abgesetzte Schmutzpartikel in der Ventilbohrung verteilen, wodurch diese zusätzlich aufwendig gereinigt werden müsste.

Demgegenüber liegt der Erfindung die Aufgabe zugrunde, eine Einbauventilanordnung mit einem Siebfilter zu schaffen, die kostengünstig herzustellen und einfach montierbar ist.

Diese Aufgabe wird durch eine Einbauventilanordnung gemäß Patentanspruch 1 gelöst.

Ein Siebfilter wird für ein Einbauventil in eine Einbaubohrung eines Gehäuses eingesetzt. Der Siebfilter weist hierbei einen Haltevorsprung auf, der beim

Einsetzen aus einer Montageposition elastisch in eine Halteposition bringbar ist. Diese Lösung hat den Vorteil, dass der Siebfilter einfach montierbar ist, in dem er zusammen mit dem Einbauventil montiert wird, und fest in der Einbaubohrung gehalten ist. Wird das Einbauventil beispielsweise bei der Wartung aus der Einbaubohrung entnommen, so bleibt der Siebfilter in dieser zurück und Partikel, die sich an diesem Filter angesammelt haben, können nicht in die Einbaubohrung gelangen. Somit können beispielsweise Arbeitsanschlüsse, die in der Einbaubohrung münden, bei der Wartung des Einbauventils nicht verschmutzt werden, so dass einer Schädigung der angeschlossenen Hydraulikkomponenten vorgebeugt ist.

Vorteilhafterweise weist der Haltevorsprung drei gleichmäßig am Umfang verteilte Schnapphaken auf, wodurch der Siebfilter in der Einbaubohrung gehalten werden kann und einfach herstellbar ist.

Die Schnapphaken können sich etwa achsparallel von einem Tragring wegstrecken und haben hierdurch eine sehr hohe Elastizität.

Ein Siebfilterabschnitt wird vorzugsweise von dem Tragring getragen und weist somit eine sehr kompakten Aufbau auf.

Am Innenumfang des Tragrings können Noppen ausgebildet sein, die in reibschlüssige oder formschlüssige Anlage an einen Außenumfangsabschnitt des Einbauventils bringbar sind. Besonders bei der Montage des Einbauventils mit dem Siebfilter ist dies von Vorteil, da der Siebfilter durch die Noppen fest auf dem Einbauventil gehalten und einfach mit dem Einbauventil in die Einbaubohrung eingesetzt werden kann, und dann selbstständig in seine Arbeitsposition schnappt.

Der Siebfilter kann kuppelförmig ausgeführt sein und die Schnapphaken enden in Axialrichtung gesehen in etwa im Bereich eines Kuppelscheitels. Somit schützen die Schnapphaken den kuppelförmigen Siebfilter in Axialrichtung, beispielsweise, wenn dieser an eine Wandung eines Zulaufanschlusses stößt.

Erfindungsgemäß ist bei einer Einbauventilanordnung eine Einbaubohrung in einem Gehäuse ausgebildet. In dieser Einbaubohrung mündet zumindest ein Zulaufanschluss und eine Gehäusepatrone eines Einbauventils kann in diese eingesetzt werden. Im Druckmittelströmungspfad von dem Zulaufanschluss zu einem Eingangsanschluss der Gehäusepatrone wird der Siebfilter eingesetzt.

Die Einbaubohrung der Einbauventilanordnung hat erfindungsgemäß eine Radialschulter, die von den Schnapphaken des Siebfilters hintergriffen ist. Dies ermöglicht einen sehr festen Sitz des Siebfilters in einer axialer Richtung.

Vorteilhafterweise hat die Gehäusepatrone des Einbauventils an einem Endabschnitt eine Ringausnehmung, in die ein Axialabschnitt des Tragrings des Siebfilters bündig eintaucht, wodurch dieser einfach mit dem Einbauventil in die Einbaubohrung bringbar ist.

Der Tragring kann in einer Montageposition stirnseitig an einer Radialschulter der Ringausnehmung anliegen und ist somit in Axialrichtung des Einbauventils festgelegt. Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
- Figur 1: eine Einbauventilanordnung in einer Schnittdarstellung gemäß einem Ausführungsbeispiel;
- Figur 2: einen Siebfilterbereich Z der Einbauventilanordnung aus Figur 1;
- Figur 3a: einen Siebfilter gemäß Figur 2 in einer Untersicht;
- Figur 3b: den Siebfilter gemäß Figur 2 in einer seitlichen Schnittdarstellung;
- Figur 3c: den Siebfilter gemäß Figur 2 in einer Draufsicht;
- Figur 4a: eine Noppe des Siebfilters in einer Vorderansicht; und
- Figur 4b: die Noppe des Siebfilters in einer seitlichen Schnittdarstellung.

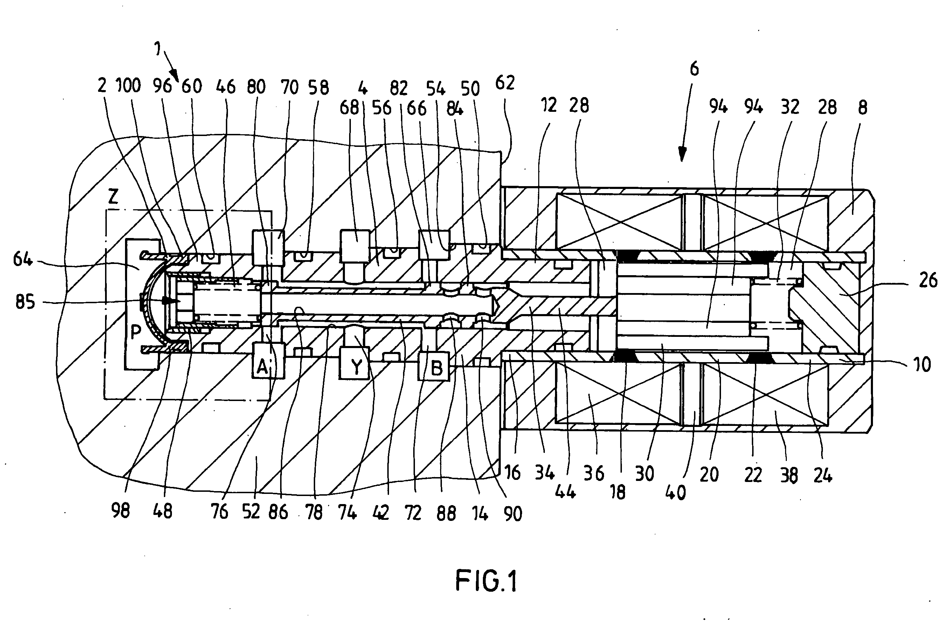

In Figur 1 ist eine Einbauventilanordnung 1 mit einem Siebfilter 2 in einer seitlichen Schnittdarstellung gemäß einem Ausführungsbeispiel gezeigt. Die Einbauventilanordnung 1 weist ein 4/3-Einbauwegeventil 4 auf, das mittels eines Doppelhubmagneten 6 verstellbar ist. Das 4/3-Einbauwegeventil 4 wird im Folgenden als Einbauventil 4 bezeichnet. Selbstverständlich ist die Erfindung nicht auf ein derartiges Einbauventil 4 begrenzt.

Der Doppelhubmagnet 6 weist ein Spulengehäuse 8 mit einem Druckrohr 10 auf, das auf einen Endabschnitt 12 einer Gehäusepatrone 14 des Einbauventils 4 aufgesetzt ist. Das Druckrohr 10 ist einstückig ausgebildet und hat einen inneren Rohrabschnitt 16, einen ersten Zwischenring 18, einen mittleren Rohrabschnitt 20, einen zweiten Zwischenring 22 und einen äußeren Rohrabschnitt 24. Während die beiden Zwischenringe 18, 22 aus nicht magnetischen Material bestehen, sind die übrigen Teile des Druckrohrs 10 aus magnetisch leitenden Material hergestellt. Im Bereich des äußeren Rohrabschnitts 24 ist das Druckrohr 10 durch ein zylindrisches Außenjoch 26 verschlossen, wodurch im Druckrohr 10 ein Innenraum 28 begrenzt ist, der einen Anker 30 aufnimmt. Dieser ist zum Außenjoch 26 hin über eine Ankerfeder 32, die zwischen Außenjoch 26 und dem Anker 30 angeordnet ist, beaufschlagt und liegt zum Einbauventil 4 hin an einen Stößel 34 des Einbauventils 4 an.

Auf dem Außenumfang des Druckrohrs 10 sind hintereinander eine erste Spule 36 sowie eine zweite Spule 38 des Doppelhubmagneten 6 im Spulengehäuse 8 angeordnet, wobei die räumlich eng beieinander liegenden Spulen 36, 38 durch eine ringförmige Flußleitscheibe 40 voneinander getrennt sind. Die Wirkungsweise eines üblichen Doppelhubmagneten 6 ist hinlänglich bekannt und wird deshalb hier nicht näher erläutert.

Das vom Doppelhubmagnet 6 betätigte Einbauventil 4 ist beispielsweise ein an sich bekanntes Ventil mit vier Anschlüssen (P, A, B, Y) und drei Stellungen, dessen als Stellglied dienender Ventilschieber 42 in der Gehäusepatrone 14 geführt ist und durch den an einem Endabschnitt 44 des Ventilschiebers 42 ausgebildeten Stößel 34 an dem Anker 30 anliegt. Der Ventilschieber 42 wird durch eine mechanische Rückstelleinrichtung mit einer Schieberfeder 46, die an einer mit der Gehäusepatrone 14 verbundenen Federbuchse 48 abgestützt ist, und der Ankerfeder 32, über den Anker 30 und dem Stößel 34, in der gezeichneten Mittelstellung zentriert.

Das Einbauventil 4 ist mit der Gehäusepatrone 14 in eine Einbaubohrung bzw. Stufenbohrung 50 eines Gehäuses 52 eingesetzt, die eine erste bis vierte Bohrungsstufe 54, 56, 58, 60 aufweist. Die erste Stufe 54 endet an einer Anschlußoberfläche 62 des Gehäuses 52 für den Doppelhubmagneten 6 und die letzte Stufe 60 in einer unbearbeiteten Zulaufkammer 64 des Gehäuses 52. Zwischen jeweils benachbarten Stufen ist jeweils eine Ringkammer 66, 68, 70 im Gehäuse 52 ausgebildet. Hierbei ist die in Figur 1 linke Ringkammer 70 mit einem Arbeitsanschluss A, die mittlere Ringkammer 68 mit einem Tankanschluss Y und die rechte Ringkammer 66 mit einem Arbeitsanschluss B verbunden. Die Zulaufkammer 64 steht mit einem Zulaufanschluss P in Verbindung.

In den Ringkammern 66, 68, 70 münden Radialbohrungsterne 72, 74, 76 der Gehäusepatrone 14, die sich von einer in der Gehäusepatrone 14 ausgebildeten Ventilbohrung 78 aus erstrecken. In dieser ist der Ventilschieber 42 über drei Ringbünde 80, 82, 84 geführt. Die Ventilbohrung 78 ist über eine axiale Eingangsöffnung 85 der Gehäusepatrone 14 und der Federbuchse 48 zur Zulaufkammer 64 hin offen.

Der Ventilschieber 42 weist eine über die Eingangsöffnung 85 zur Zulaufkammer 64 offene Sacklochbohrung 86 und zwei die Sacklochbohrung 86 kreuzende Querbohrungen 88, 90 auf. Wobei die in Figur 1 rechts angeordnete Querbohrung 90 eine Druckmittelverbindung zwischen der Zulaufkammer 64 und dem Innenraum 28 des Doppelhubmagneten 6 schafft. Die Stirnseiten des Ankers 30 sind über Ankerlängsbohrungen 94 des Ankers 30 druckausgeglichen.

In seiner in Figur 1 dargestellten Grundposition sperrt der Ventilschieber 42 des Einbauventils 4 die Druckmittelverbindung zwischen dem Zulaufanschluss P und den beiden Arbeitsanschlüssen A, B ab und öffnet die Verbindung der Arbeitsanschlüsse A, B zum Tankanschluss Y. Bei einer Verschiebung des Ventilschiebers 42 aus der Grundposition in Figur 1 durch den Doppelhubmagneten 6 nach rechts, wird über den Ringbund 80 der Arbeitsanschluss A zum Tankanschluss Y und zum Arbeitsanschluss B zugesteuert und zum Zulaufanschluss P aufgesteuert. Die Verbindung zwischen dem Tankanschluss Y und dem Arbeitsanschluss B bleibt weiterhin bestehen. Wird der Ventilschieber 42 aus der Grundposition in Figur 1 nach links verschoben, so wird der Arbeitsanschluss B durch den Ringbund 82 zum Zulaufanschluss P aufgesteuert und zum Tankanschluss Y und Arbeitsanschluss A zugesteuert, wobei der Arbeitsanschluss A weiterhin mit dem Tankanschluss Y verbunden ist.

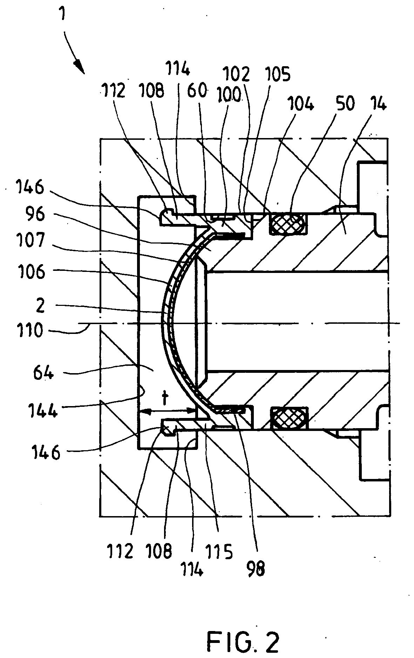

Die Gehäusepatrone 14 des Einbauventils 4 ist an einem von dem Doppelhubmagneten 6 abgewandten Endbereich 96 mit einer Ringausnehmung 98 radial zurückgestuft. In diese Ringausnehmung 98 ist der Siebfilter 2 eingesetzt. Im Folgenden wird der Siebfilter 2 anhand eines Ausschnitts Z der Einbauventilanordnung 1 in Figur 2 näher erläutert.

Figur 2 zeigt den Ausschnitt Z mit dem Siebfilter 2 der Einbauventilanordnung 1 aus Figur 1 in einer vergrößerten Darstellung. Die Gehäusepatrone 14 erstreckt sich in etwa bis zur Zulaufkammer 64, wobei der Siebfilter 2 mit einem Tragring 100 in die Ringausnehmung 98 bündig eingesetzt ist. Hierbei liegt der Siebfilter 2 mit einer Außenringfläche 102 an der vierten Bohrungsstufe 60 der Stufenbohrung 50 an und stützt sich stirnseitig mit einer Tragringfläche 104 an einer Ringschulter 105 der Ringausnehmung 98 ab. Vom Tragring 100 aus erstreckt sich eine Filterkuppel 106 über den Endbereich 96 der Gehäusepatrone 14 und ragt abschnittsweise in den Bereich der Zulaufkammer 64. Die Filterkuppel 106 liegt dabei in etwa an einem Fasenabschnitt 107 des Endbereichs 96 der Gehäusepatrone 14 an.

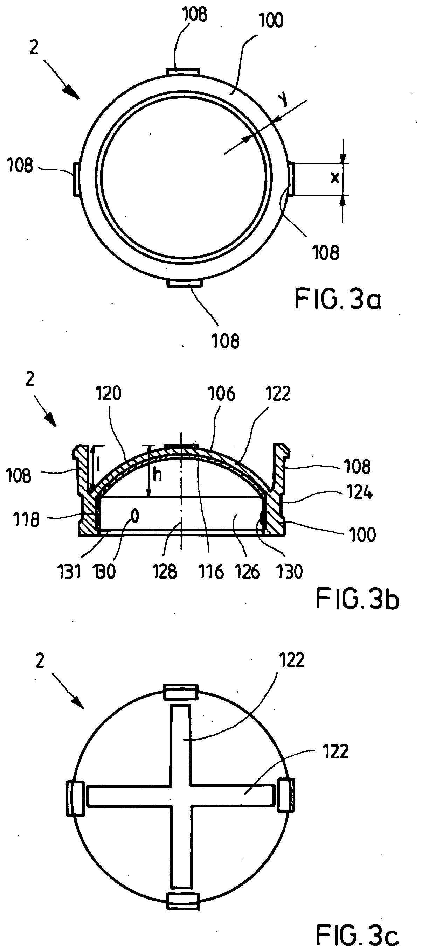

Von dem Tragring 100 aus erstrecken sich des Weiteren Schnapphaken 108 in die Zulaufkammer 64. Deren jeweilige Längsachse verläuft dabei in etwa achsparallel zur Längsachse 110 der Gehäusepatrone 14. Die Schnapphaken 108 haben an ihrem zulaufkammerseitigen Ende eine Hakennase 112, die eine Radialschulter 114 der Stufenbohrung 50 hintergreifen. An dem von der Hakennase 112 entfernten Endbereich 115 der Schnapphaken 108 stützen sich diese abschnittsweise an der Stufenbohrung 50 ab. In den folgenden Figuren 3a bis 3c wird der Siebfilter 2 genauer erläutert.

In Figur 3a ist der Siebfilter 2 in einer Untersicht, in Figur 3b in einer Seitenansicht und in Figur 3c in einer Draufsicht gezeigt. In Figur 3a ist erkennbar, dass vier Schnapphaken 108 auf einem gemeinsamen Teilkreis liegend um den Tragring 100 herum verteilt sind. Die Breite x der Schnapphaken 108 entspricht in etwa der Dicke y des Tragrings 100. Die axiale Länge I der Schnapphaken 108 in Figur 3b ist etwas länger als die Höhe h der Filterkuppel 106.

In Figur 3b ist der genaue Aufbau des Siebfilters 2 erkennbar. Demgemäß hat dieser ein Filtergewebe 116 mit einem Ringabschnitt 118 und einen Kuppelabschnitt 120. Der Ringabschnitt 118 wird in dem Tragring 100 des Siebfilters 2 gehalten, wobei der Tragring 100 bei der Herstellung beispielsweise im Kunststoffspritzgussverfahren um den Ringabschnitt 118 des Filtergeflechts 116 gespritzt wird.

Von dem Tragring 100 aus erstrecken sich Streben 122, die außen entlang des Kuppelabschnitts 120 des Filtergewebes 116 verlaufen. In Figur 3c sind die Streben 122 in der Draufsicht sichtbar. Diese sind kreuzförmig angeordnet und etwas schmäler als die Breite x der Schnapphaken 108 aus Figur 3a. Die Streben 122 fixieren zusammen mit dem Tragring 100 das Filtergewebe 116 (siehe Figur 3b).

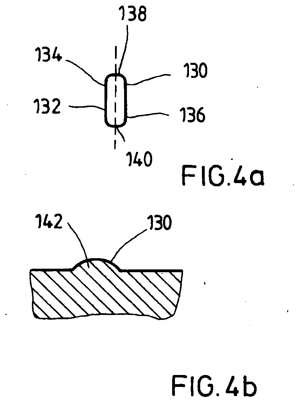

An dem Tragring 100 ist unterhalb der Schnapphaken 108 in Figur 3b eine Außenumfangsnut 124 ausgebildet. An einer Innenumfangswandung 126 des Tragrings 100 sind mindestens drei länglicher Noppen 130 angeformt, die sich achsparallel zur Längsachse 128 des Siebfilters 2 erstrecken und diesen in der Ringausnehmung 98 in Figur 1 reibschlüssig an der Gehäusepatrone 14 halten. Die Noppen 130 sind dabei in etwa mittig zur Höhe des Tragrings 100 angeordnet. Im in Figur 3b unteren Bereich des Tragrings 100 ist dieser zur Innenumfangswandung 126 mit einer Einführfase 131 angefast. In den folgenden Figuren 4a und 4b werden die Noppen 130 vergrößert dargestellt und genauer erläutert.

Figur 4a zeigt die Noppe 130 aus Figur 3b in einer Draufsicht und in Figur 4b in einer Querschnittsansicht. Die Noppe 130 hat gemäß Figur 4a eine längliche Umfangsform 132 mit zwei Langseiten 134, 136 und zwei Bogenseiten 138, 140. In Figur 4b ist die hügelförmige Querschnittsfläche 142 der Noppe 130 erkennbar. Die genaue Funktion der Noppen 130 wird weiter unten erläutert.

Anhand der Figur 1 und 2 wird die Montage und die Funktionsweise des Siebfilters 2 näher aufgezeigt. Zur Montage wird der Siebfilter 2 in Figur 1 auf die Ringausnehmung 98 der Gehäusepatrone 14 gesteckt, bevor diese in die Stufenbohrung 50 eingesetzt wird. Aufgrund des Fasenabschnitts 107 der Gehäusepatrone 14 aus Figur 2 und der Einführfase 131 des Siebfilters 2, siehe Figur 3b, ist dieser einfach auf der Gehäusepatrone 14 zentrierbar. Die Noppen 130 und der Tragring 100 des Siebfilters 2 (siehe Figur 3b), werden bei dem Steckvorgang elastisch verformt und gleichen Fertigungstoleranzen des Siebfilters 2 und der Gehäusepatrone 14 aus, wobei nach der Montage des Siebfilters 2 maximal ein Spalt zwischen dem Tragring 100 und der Gehäusepatrone 14 von der Größe einer Maschenweite des Filtergewebes 116 (siehe Figur 3b) vorhanden sein kann. Hierdurch können Schmutzpartikel mit einer Größe, die von dem Filtergewebe 116 ausgefiltert werden würde, auch nicht durch diesen Spalt gelangen. Des Weiteren wird durch die Noppen 130 des Siebfilters 2 dieser reibschlüssig auf der Ringausnehmung 98 fixiert und die zum Aufstecken und Abziehen des Siebfilters 2 benötigte Kraft wird durch den oben beschriebenen Spalt bzw. durch die Noppen 130 relativ gering. Die Gehäusepatrone 14 wird zusammen mit dem Siebfilter 2 in die Stufenbohrung 50 geführt. Beim Einsetzen in die in der Darstellung in Figur 1 nach links hin zurückgestufte Stufenbohrung 50 werden die Schnapphaken 108 in Richtung der Längsachse 110 der Gehäusepatrone 14 elastisch radial nach innen vorgespannt. Gleiten die Schnapphaken 108 des Siebfilters 2 am Ende der Stufenbohrung 50 in die Zulaufkammer 64, dann entspannen sich diese aus der elastisch vorgespannten Lage und schnappen in die Zulaufkammer 64 hinein, so dass die Hakennasen 112 die Radialschulter 114 der Stufenbohrung 50 hintergreifen. Durch die Außenumfangsnut 124, siehe Figur 3b, des Siebfilters 2 liegt dieser nur mit der Außenringfläche 102, siehe Figur 2, an der Stufenbohrung 50 an und kann somit mit geringer Reibung in diese eingeführt werden.

Wird beispielsweise bei der Wartung der Einbauventilanordnung 1 das Einbauventil 4 aus der Stufenbohrung 50 entnommen, so bleibt der Siebfilter 2 in seiner montierten Position zurück, da dieser durch die Schnapphaken 108 zurückgehalten wird und nicht mehr axial aus der Stufenbohrung 50 herausziehbar ist. Würde der Siebfilter 2 mit dem Einbauventil 4 aus der Stufenbohrung 50 entnommen werden, so könnten sich gefilterte Schmutzpartikel, die sich am Filtergewebe 116 (siehe Figur 3b) des Siebfilters 2 angesammelt haben, von diesem lösen und in die Ringkammer 66, 68, 70 des Gehäuses 52 gelangen und diese verunreinigen.

Die axiale Verschiebbarkeit des Siebfilters 2 entlang der Längsachse 110 wird einmal durch Anlage der Hakennasen 112 an der Radialschulter 114 der Stufenbohrung 50 begrenzt und zum Anderen durch eine Bodenfläche 144 der Zulaufkammer 64, siehe Figur 2, an die Kopfflächen 146 der Schnapphaken 108 des Siebfilters 2 anliegen können. Letzteres geschieht beispielsweise beim Wiedereinbau des Einbauventils 4 falls der Siebfilter 2 nicht in die Ringausnehmung 98 in Figur 2 gleitet, sondern von dem Einbauventil 4 axial verschoben wird. Liegen die Kopfflächen 146 an der Bodenfläche 144 der Zulaufkammer 64 an, so erfüllt der Siebfilter 2 weiterhin seine volle Funktion, da die Länge I der Schnapphaken 108 aus Figur 3b in etwa der Tiefe t der Zulaufkammer 64 aus Figur 2 entspricht und sich somit der Tragring 100 weiterhin in der Stufenbohrung 50 befindet.

In Figur 1 kann Druckmittel in der Einbauventilanordung 1 von dem Zulaufanschluss P über den Siebfilter 2 zu den Anschlüssen A und B strömen. Der Siebfilter 2 ist gegen die Strömungsrichtung gewölbt, wodurch Schmutzpartikel im Wesentlichen entlang des Kuppelabschnitts 120 des Filtergewebes 116, siehe Figur 3b, gleiten und sich im Bereich des Außendurchmessers des Siebfilters 2 ansammeln. Somit ist eine minimale Verschmutzung des Filtergewebes 116 ermöglicht und der Strömungswiderstand bleibt während der Einsatzdauer des Siebfilters 2 weitestgehend konstant.

Offenbart ist ein Siebfilter für ein Einbauventil, der in einer Einbaubohrung eines Gehäuses eingesetzt ist. Der Siebfilter weist dabei einen Haltevorsprung auf, der beim Einsetzen aus einer Montageposition in eine Halteposition bringbar ist und in eine Zulaufkammer eines Gehäuses eingreift.

### Bezugszeichenliste

- 1: Einbauventilanordnung
- 2: Siebfilter
- 4: Einbauventil
- 6: Doppelhubmagnet
- 8: Spulengehäuse
- 10: Druckrohr
- 12: Endabschnitt
- 14: Gehäusepatrone
- 16: Rohrabschnitt
- 18: Zwischenring
- 20: Rohrabschnitt
- 22: Zwischenring
- 24: Rohrabschnitt
- 26: Außenjoch
- 28: Innenraum
- 30: Anker
- 32: Ankerfeder
- 34: Stößel
- 36: Spule
- 38: Spule
- 40: Flußleitscheibe
- 42: Ventilschieber
- 44: Endabschnitt
- 46: Schieberfeder
- 48: Federbuchse
- 50: Stufenbohrung
- 52: Gehäuses
- 54: Bohrungsstufe
- 56: Bohrungsstufe
- 58: Bohrungsstufe
- 60: Bohrungsstufe
- 62: Anschlußoberfläche
- 64: Zulaufkammer
- 66: Ringkammer
- 68: Ringkammer
- 70: Ringkammer
- 72: Radialbohrungstern
- 74: Radialbohrungstern
- 76: Radialbohrungstern
- 78: Ventilbohrung
- 80: Ringbund
- 82: Ringbund
- 84: Ringbund
- 85: Eingangsöffnung
- 86: Sacklochbohrung
- 88: Querbohrung
- 90: Querbohrung
- 94: Ankerlängsbohrung
- 96: Endbereich
- 98: Ringausnehmung
- 100: Tragring
- 102: Außenringfläche
- 104: Tragringfläche
- 105: Ringschulter
- 106: Filterkuppel
- 107: Fasenabschnitt
- 108: Schnapphaken
- 110: Längsachse
- 112: Hakennase
- 114: Radialschulter
- 115: Endbereich
- 116: Filtergewebe
- 118: Ringabschnitt
- 120: Kuppelabschnitt
- 122: Streben
- 124: Außenumfangsnut
- 126: Innenumfangswandung
- 128: Längsachse
- 130: Noppen
- 131: Einführfase
- 132: Umfangsform
- 134: Langseite
- 136: Langseite
- 138: Bogenseite
- 140: Bogenseite
- 142: Querschnittsfläche
- 144: Bodenfläche
- 146: Kopffläche
- A: Arbeitsanschluss
- B: Arbeitsanschluss
- P: Zulaufanschluss
- Y: Tankanschluss
- x: Breit
- y: Dicke
- h: Höhe
- l: Länge

## Patentansprüche

1. Einbauventilanordnung mit einer in einem Gehäuse (52) ausgebildeten Einbaubohrung (50), in der zumindest ein Zulaufanschluss (P) ausgebildet ist und in die eine Gehäusepatrone (14) eines Einbauventils (4) eingesetzt ist, wobei im Druckmittelströmungspfad von dem Zulaufanschluss (P) zu einer Eingangsöffnung (85) der Gehäusepatrone (14) ein Siebfilter (2) für das Einbauventil (4)eingesetzt ist, **dadurch gekennzeichnet, dass** der Siebfilter (2) einen Haltevorsprung (108) hat, der beim Einsetzen des Einbauventils (4) aus einer Montageposition durch elastische Verformung in eine Halteposition bringbar ist, in der der Haltevorsprung (108) in eine Zulaufkammer (64) des Gehäuses (52) eingreift, wobei der Haltevorsprung (108) Schnapphaken (108) hat, und wobei die Einbaubohrung (50) eine Radialschulter (114) hat, die von den Schnapphaken (108) des Siebfilters (2) hintergriffen ist.

2. Einbauventilanordnung nach Anspruch 1, wobei der Haltevorsprung (108) mindestens drei gleichmäßig am Umfang verteilte Schnapphaken (108) hat.

3. Einbauventilanordnung nach Anspruch 2, wobei sich die Schnapphaken (108) etwa achsparallel von einem Tragring (100) wegstrecken.

4. Einbauventilanordnung nach Anspruch 3, wobei der Tragring (100) ein Filtergewebe (116) trägt.

5. Einbauventilanordnung nach Anspruch 3 oder 4, wobei an einer Innenumfangswandung (126) des Tragrings (100) Noppen ausgebildet sind, die reibschlüssig oder formschlüssig in Anlage an einen Außenumfangsabschnitt (98) des Einbauventils (4) bringbar sind.

6. Einbauventilanordnung nach einem der Ansprüche 2 bis 5, wobei der Siebfilter eine kuppelförmige Filterkuppel (106) hat und die Schnapphaken (108) etwa in Axialrichtung gesehen im Bereich eines Kuppelscheitels enden.

7. Einbauventilanordnung nach einem der Ansprüche 3 bis 6, wobei die Gehäusepatrone (14) an einem Endbereich (96) eine Ringausnehmung (98) hat, in die der Tragring (100) des Siebfilters (2) bündig eintaucht.

8. Einbauventilanordnung nach einem der Ansprüche 3 bis 7, wobei der Tragring (100) in der Montageposition stirnseitig an einer Ringschulter (105) der Ringausnehmung anliegt.

## Claims

1. Installation valve arrangement having an installation bore (50), formed in a housing (52), in which at least one inflow connector (P) is formed and into which a housing cartridge (14) of an installation valve (4) is inserted, wherein a screen-type filter (2) for the installation valve (4) is inserted in the flow path of pressurizing medium from the inflow connector (P) to an input opening (85) in the housing cartridge (14), **characterized in that** the screen-type filter (2) has a retaining protrusion (108) which, upon insertion of the installation valve (4), is able to be moved by elastic deformation from a mounting position into a retaining position in which the retaining protrusion (108) engages in an inflow chamber (64) of the housing (52), wherein the retaining protrusion (108) has snap hooks (108), and wherein the installation bore (50) has a radial shoulder (114) behind which the snap hooks (108) of the screen-type filter (2) engage.

2. Installation valve arrangement according to Claim 1, wherein the retaining protrusion (108) has at least three snap hooks (108) distributed uniformly around the circumference.

3. Installation valve arrangement according to Claim 2, wherein the snap hooks (108) extend away from a support ring (100) in an approximately axially parallel manner.

4. Installation valve arrangement according to Claim 3, wherein the support ring (100) bears a filter fabric (116).

5. Installation valve arrangement according to Claim 3 or 4, wherein nubs are formed on an inner circumferential wall (126) of the support ring (100), said nubs being able to be brought into abutment against an outer circumferential portion (98) of the installation valve (4) in a frictional or form-fitting manner.

6. Installation valve arrangement according to one of Claims 2 to 5, wherein the screen-type filter has a dome-shaped filter dome (106) and the snap hooks (108) end approximately in the region of a dome apex as seen in the axial direction.

7. Installation valve arrangement according to one of Claims 3 to 6, wherein the housing cartridge (14) has, in an end region (96), an annular recess (98) into which the support ring (100) of the screen-type filter (2) fits in a flush manner.

8. Installation valve arrangement according to one of Claims 3 to 7, wherein, in the mounted position, the support ring (100) bears at its end side against an annular shoulder (105) of the annular recess.

## Revendications

1. Agencement de soupape intégrée comprenant un alésage d'installation (50) réalisé dans un boîtier (52), dans lequel est réalisé au moins un raccord d'alimentation (P) et dans lequel est insérée une cartouche de boîtier (14) d'une soupape intégrée (4), un filtre tamis (2) pour la soupape intégrée (4) étant inséré dans le chemin d'écoulement de fluide sous pression depuis le raccord d'alimentation (P) jusqu'à une ouverture d'entrée (85) de la cartouche de boîtier (14), **caractérisé en ce que** le filtre tamis (2) présente une saillie de retenue (108) qui, lors de l'insertion de la soupape intégrée (4), peut être amenée par déformation élastique d'une position de montage dans une position de retenue dans laquelle la saillie de retenue (108) vient en prise dans une chambre d'alimentation (64) du boîtier (52), la saillie de retenue (108) présentant des crochets d'encliquetage (108), et l'alésage d'installation (50) présentant un épaulement radial (114) avec lequel les crochets d'encliquetage (108) du filtre tamis (2) viennent en prise par l'arrière.

2. Agencement de soupape intégrée selon la revendication 1, dans lequel la saillie de retenue (108) présente au moins trois crochets d'encliquetage (108) répartis uniformément sur la périphérie.

3. Agencement de soupape intégrée selon la revendication 2, dans lequel les crochets d'encliquetage (108) s'étendent approximativement avec leurs axes parallèles à l'écart d'une bague de support (100).

4. Agencement de soupape intégrée selon la revendication 3, dans lequel la bague de support (100) porte un tissu filtrant (116).

5. Agencement de soupape intégrée selon la revendication 3 ou 4, dans lequel des boursouflures sont réalisées au niveau d'une paroi périphérique intérieure (126) de la bague de support (100), lesquelles peuvent être amenées par engagement par correspondance de formes ou par friction en appui contre une portion périphérique extérieure (98) de la soupape intégrée (4).

6. Agencement de soupape intégrée selon l'une quelconque des revendications 2 à 5, dans lequel le filtre tamis présente un dôme de filtre en forme de dôme (106) et les crochets d'encliquetage (108) se terminent approximativement dans la région d'un sommet du dôme, vu dans la direction axiale.

7. Agencement de soupape intégrée selon l'une quelconque des revendications 3 à 6, dans lequel la cartouche de boîtier (14) présente, au niveau d'une région d'extrémité (96), un évidement annulaire (98) dans lequel la bague de support (100) du filtre tamis (2) plonge en affleurement.

8. Agencement de soupape intégrée selon l'une quelconque des revendications 3 à 7, dans lequel la bague de support (100) s'applique dans la position de montage du côté frontal contre l'épaulement annulaire (105) de l'évidement annulaire.
